(19) Europäisches Patentamt
European Patent Office
Office européen des brevets

(11) Publication number: **0 272 412**
**A2**

(12) # EUROPEAN PATENT APPLICATION

(21) Application number: **87115845.7**

(22) Date of filing: **28.10.87**

(51) Int. Cl.⁴: **C08J 5/12** , C09D 3/80 , C08L 69/00

(30) Priority: **04.12.86 US 937785**

(43) Date of publication of application: **29.06.88 Bulletin 88/26**

(84) Designated Contracting States: **DE FR GB IT NL**

(71) Applicant: **GENERAL ELECTRIC COMPANY**
**1 River Road**
**Schenectady New York 12305(US)**

(72) Inventor: **Boutni, Omar Mohamed**
**1232 Oriole Circle**
**Mt. Vernon Indiana 47620(US)**
Inventor: **Moore, James Eugene**
**901 Lower Harmony Road**
**Mt. Vernon Indiana 47620(US)**

(74) Representative: **Catherine, Alain et al**
**General Electric France Service de Propriété Industrielle 18 Rue Horace Vernet B.P. 76**
**F-92134 Issy-les-Moulineaux Cedex(FR)**

(54) **Aromatic carbonate articles bonded by a photocured acrylic composition.**

(57) A first shaped article comprised of an aromatic carbonate resin bonded to at least one other plastic shaped article by means of an ultraviolet radiation cured thermoset acrylic resin.

EP 0 272 412 A2

# AROMATIC CARBONATE ARTICLES BONDED BY A PHOTOCURED ACRYLIC COMPOSITION

## BACKGROUND OF THE INVENTION

Aromatic carbonate resins such as polycarbonate resins are thermoplastic resinous materials possessing many excellent physical and chemical properties which render them useful in a wide range of applications. They exhibit, for example, excellent properties of toughness, impact resistance, heat resistance and dimensional stability, optical clarity or non-opaqueness, and physiological inertness. Because of their excellent property spectrum polycarbonate resins are used in various utilities including various molded and extruded articles. There exist many applications where it is necessary to bond or adhere two polycarbonate parts together, or to bond or adhere a polycarbonate article to an article comprised of a resin other than polycarbonate such as, for example, polyvinyl chloride. An example of this is in the medical arts wherein a flexible tube made from polyvinyl chloride is bonded to a connector made from polycarbonate resin.

It is currently the practice to bond various polycarbonate parts to each other or to parts made of another resin such as polyvinyl chloride, by using various adhesives or by solvent bonding utilizing methylene chloride. These current bonding practices suffer from the disadvantage that many of the available adhesives either deleteriously affect the polycarbonate resin, do not provide an adequate bond between the polycarbonate resin and another resin, or both.

Thus, for example, utilizing solvent bonding of polyvinyl chloride to polycarbonate using methylene chloride as the solvent bonding agent results in the opitcal clarity of the polycarbonate part being adversely affected due to the aggresiveness of methylene chloride towards polycarbonate. Furthermore, since methylene chloride is a solvent for polycarbonate crazing and cracking of the polycarbonate part often occur, especially upon application of stress or strain to the polycarbonate article.

It would thus be very advantageous if an adhesive material could be provided which does not adversely affect the polycarbonate resin and which forms a strong and durable bond between the polycarbonate part and another part comprised of either another resin or of the same polycarbonate resin.

It is an object of the instant invention to provide polycarbonate resin articles which are bonded to other polycarbonate parts or to parts or articles of another thermoplastic resin such as polyvinyl chloride by means of an adhesive which forms a strong and durable bond therebetween and does not significantly deleteriously affect the polycarbonate resin.

## SUMMARY OF THE INVENTION

The instant invention is directed to a polycarbonate resin article bonded to another polycarbonate resin article or to an article made from a plastic material other than polycarbonate, preferably polyvinyl chloride, by means of a photocured acrylic.

## DESCRIPTION OF THE INVENTION

In accordance with the instant invention there is provided a plurality of plastic parts or articles, at least one of which is comprised of an aromatic carbonate polymer, bonded together by means of an adhesive material comprised of a photocured acrylic.

Further in accordance with the present invention there is provided a method of bonding together a plurality of plastic parts, at least one of which is comprised of an aromatic carbonate polymer, which comprises applying between the interfaces of said parts a photocurable acrylic and exposing said photocurable acrylic to light of sufficient intensity and for a period of time effective to photocure said photocurable acrlyic, thereby forming a strong and durable bond between said parts.

The term "aromatic carbonate polymers" as used herein is meant to include both the polycarbonates and the copolyester-carbonates. The aromatic polycarbonate resins for use herein can generally be prepared by the reaction of at least one dihydric phenol and a carbonate precursor such as phosgene, a haloformate, or a carbonate ester. Generally speaking, such polycarbonate resins may be typified as being comprised of at least one recurring structural unit represented by the formula

I. $-\!\left(O - A - O - \overset{O}{\overset{\|}{C}}\right)\!-$

wherein A is a divalent aromatic residue of the dihydric phenol employed in the polymer forming reaction. Preferably, the polycarbonate polymers used to provide the articles of the instant invention have an intrinsic viscosity (as measured in methylene chloride at 25°C.) ranging from about 0.30 to about 1.00 dl/gm. The dihydric phenols which may be employed to provide such aromatic carbonate polymers may be represented by the general formula

II. 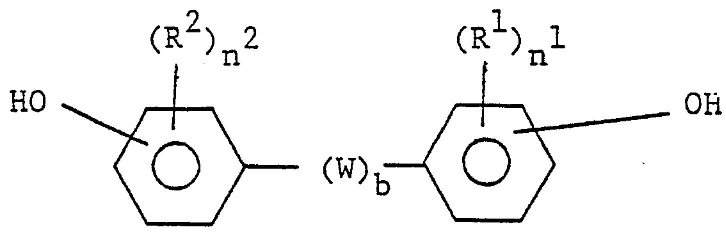

wherein:

$R^2$ is independently selected from halogen, monovalent hdyrocarbon, and monovalent hydrocarbonoxy radicals;

$R^1$ is independently selected from halogen, monovalent hydrocarbon, and monovalent hydrocarbonoxy radicals;

W is selected from divalent hydrocarbon radical, -S-, -S-S-, -O-,

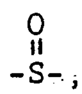; 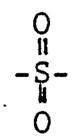, and 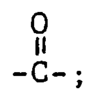;

$n^2$ and $n^1$ are independently selected from integers having a value from o to 4 inclusive; and

b is either zero or one.

The monovalent hydrocarbon radicals represented by $R^2$ and $R^1$ include the alkyl, cycloalkyl, aryl, aralkyl and alkaryl radicals. The preferred alkyl radicals are those containing from 1 to about 12 carbon atoms. The preferred cycloalkyl radicals are those containing from about 4 to about 8 ring carbon atoms. The preferred aryl radicals are those containing from 6 to 12 ring carbon atoms, i.e., phenyl, naphthyl, and biphenyl. The preferred alkaryl and aralkyl radicals are those containing from 7 to about 14 carbon atoms.

The preferred halogen radicals represented by $R^2$ and $R^1$ are chlorine and bromine.

The divalent hydrocarbon radicals represented by W include the alkylene, alkylidene, cycloalkylene and cycloalkylidene radicals. The preferred alkylene radicals are those which contain from 2 to about 30 carbon atoms. The preferred alkylidene radicals are those containing from 1 to about 30 carbon atoms. The preferred cycloalkylene and cycloalkylidene radicals are those containing from 6 to about 16 ring carbon atoms.

The monovalent hydrocarbonoxy radicals represented by $R^2$ and $R^1$ may be represented by the formula $-OR^3$ wherein $R^3$ is a monovalent hydrocarbon radical of the type described hereinafore for $R^2$ and $R^1$. Preferred monovalent hydrocarbonoxy radicals are the alkoxy and aryloxy radicals.

Some illustrative non-limiting examples of the dihydric phenols falling within the scope of Formula II include:

2,2-bis(4-hydroxyphenyl)propane (bisphenol-A);
2,2-bis(3,5-dibromo-4-hydroxyphenyl)propane;
2,2-bis(3,5-dimethyl-4-hydroxyphenyl)propane;
1,1-bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis (hydroxyphenyl)cyclododecane;
1,1-bis(3,5-dimethyl-4-hydroxyphenyl)cyclododecane;
4,4'-dihydroxydiphenyl ether;
4,4'-thiodiphenol;

4,4'-dihydroxy-3,3'-dichlorodiphenyl ether; and
4,4'-dihydroxy-2,5-dihydroxydiphenyl ether.

Other useful dihydric phenols which are also suitable for use in the preparation of the above polycarbonates are disclosed in U.S. Patent Nos. 2,999,835; 3,028,365; 3,334,154; and 4,131,575, all of which are incorporated herein by reference.

These aromatic polycarbonates can be manufactured by known processes, such as, for example and as mentioned above, by reacting a dihydric phenol with a carbonate precursor, such as phosgene, in accordance with methods as set forth in the above-cited literature and U.S. Patent Nos. 4,018,750 and 4,123,436, incorporated herein by reference, or by transesterification processes such as disclosed in U.S. Patent No. 3,153,008, incorporated by reference, as well as other processes known to those skilled in the art.

It is possible to employ two or more different dihydric phenols or a copolymer of a dihydric phenol with glycol or with a hydroxy or acid terminated polyester or with a dibasic acid in the event a carbonate copolymer or interpolymer rather than a homopolymer is desired for use in the preparation of the polycarbonate mixture of the invention. Branched polycarbonates are also useful, such as those described in U.S. Patent No. 4,001,184, incorporated herein by reference. Also there can be utilized blends of a linear polycarbonate and a branched polycarbonate. Moreover, blends of any of the above materials may be employed in the practice of this invention to provide the aromatic polycarbonate. In any event, the preferred aromatic carbonate polymer for use herein is a homopolymer derived from 2,2-bis(4-hydroxyphenyl) propane (bisphenol-A).

The copolyestercarbonate resin are well known in the art and are described, along with methods for their preparation, inter alia, in U.S. Patent No. 3,169,121, incorporated herein by reference, as well as in U.S. Patent Nos. 4, 238,596; 4,156,069 and 4,238,597, all of which are likewise incorporated herein by reference.

Briefly stated the high molecular weight thermoplastic aromatic copolyestercarbonates comprise recurring carbonate groups, carboxylate groups, and aromatic carbocyclic groups in the polymer chain in which at least some of the carbonate groups and at least some of the carboxylate groups are bonded directly to the ring carbon atoms of the aromatic carbocylic groups.

These copolyester-carbonates contain ester bonds and carbonate bonds in the chain, wherein the amount of ester bonds is in the range of from about 25 to about 90 mole percent, preferably from about 35 to about 80 mole percent. For example, 5 moles of bisphenol-A reacting completely with 4 moles of isophthaloyl dichloride and 1 mole of phosgene would give a copolyestercarbonate of 80 mole percent ester bonds.

The copolyestercarbonates may be prepared by a variety of methods including interfacial polymerization, melt polymerization, and transesterification.

These copolyestercarbonates may be readily prepared by the reaction of a dihydric phenol, a carbonate precursor, and an ester precursor. The dihydric phenols and the carbonate precursors are the same as those described hereinafore for the preparation of the polycarbonates. The ester precursor may be a difunctional carboxylic acid or, preferably, its ester forming reactive derivative. The difunctional carboxylic acids are described in U.S. Patent No. 3, 169, 121, incorporated herein by reference.

The preferred ester forming reactive derivatives of the difunctional carboxylic acids are the diacid halides, preferably the diacid chlorides. Some illustrative non-limiting examples of these derivatives include isophthaloyl chloride, terephthaloyl chloride, and mixtures thereof. A particularly useful mixture of the ester forming reactive derivatives of isophthalic acid and terephthalic acid is one which contains, in a weight ratio, from about 1:10 to about 9.8:0.2 of isophthaloyl dichloride to terephthaloyl dichloride.

Also included within the scope of the instant invention are the thermoplastic randomly branched copolyestercarbonates. These are derived from a dihydric phenol, a carbonate precursor, an ester precursor, and a minor amount of a branching agent. The branching agents are well known in the art and are generally aromatic compounds containing at least three functional groups which may be hydroxyl, carboxyl, carboxylic anhydride, haloformyl, or mixtures thereof. Some illustrative non-limiting examples of these branching agents include trimellitic anhydride, trimellitic acid, trimellityl trichloride, 4-chloformyl phthalic anhydride, pyromellitic acid, pyromellitic dianhydride, mellitic acid, mellitic anhydride, trimesic acid, and benzophenonetetracarboxylic acid.

Also included herein are blends of linear and branched copolyestercarbonates.

A particularly useful class of aromatic copolyestercarbonates is that derived from bisphenol-A; phosgene; and isophthalic acid, terephthalic acid, or a mixture of isophthalic acid and terephthalic acid, or the reactive ester forming derivatives of these acids such as terephthaloyl dichloride, isophthaloyl dichloride, or a mixture of isophthaloyl dichloride and terephthaloyl dichloride. The molar range of terephthalate units, the

remainder of the copolymer ester units preferably comprising isophthalate units, is generally from about 2 to 90 percent, and preferably from about 5 to about 75 percent.

The aforedescribed carbonate polymers may, optionally, be admixed or blended with other polymers such as, for example, acrylates, polyolefins, EPDM type polymers, styrenics, butadiene, copolyester and the like.

The copolyester is preferred and is prepared from 1,4-cyclohexanedimethanol and aromatic diacids or diacid ester, usually of the isophthalic acid family, the terephthalic acid family or mixtures of the isophthalic acid and terephthalic acid. Copolyesters with reaction residues of 1,4 cyclohexanedimethanol and a mixture of terephthalic and isophthalic acid are marketed under the trademark Kodar A150 by Eastman. The glycol portion of this type of copolymer need not only be made up of 1,4 cyclohexanedimethanol residues but may contain residues of other glycols, usually alkylene glycols having two to ten carbon atoms, preferably two to four carbon atoms, more preferably two carbon atoms, i.e. ethylene. Generally, the molar ratio of the 1,4-cyclohexanedimethanol to ethylene glycol in the glycol portion is from about 4:1 to 1:4, with an acid portion comprising terephthalic acid, or isophthalic acid or mixtures of both acids.

The copolyester component may be prepared by procedures well known to those skilled in this art, such as by condensation reactions substantially as shown and described in U.S. Patent 2,901,466.

The copolyesters for use in the subject invention generally will have an intrinsic viscosity of at least about 0.4 dl/gm as measured in 60/40 phenol/tetra chloroethane or other similar solvent at about 25°C. and will have a heat distortion temperature of from about 60°C to 70°C. The relative amounts of the 1,4-cyclohexane dimethanol and the acid portion is terephthalic acid. A preferred copolyester of this type is commercially available under the tradename KODAR PETG 6763 from Eastman Chemical Company. A further preferred copolyester is one where the 1,4-cyclohexane dimethanol is predominant molar wise over the ethylene glycol. A copolyester of this type is commercially available from Eastman Chemical Co. under the tradename KODAR PETG.

The acrylic adhesive utilized in the instant invention to bond the aromatic carbonate articles to articles produced from another plastic material or from the same or different aromatic carbonate resin is comprised of the photo-reaction products of at least one photocurable polyfunctional acrylate monomer.

The polyfunctional acrylate monomers of the present invention may be represented by the general formula:

III. $(H_2C = CH - \overset{O}{\overset{\|}{C}} - O \rightarrow)_n R$

wherein n is an integer from 2 to 8, preferably from 2 to 6, and more preferably from 2 to 4; and R is a n functional hydrocarbon residue, a n functional substituted hydrocarbon residue, a n functional hydrocarbon residue containing at least one ether linkage, and a n functional substituted hydrocarbon residue containing at least one ether linkage.

Preferred n functional hydrocarbon residues are the n functional aliphatic, preferably saturated aliphatic, hydrocarbon residues containing from 1 to about 20 carbon atoms and the n functional aromatic hydrocarbon residues containing from 6 to about 10 carbon atoms.

Preferred n functional hydrocarbon residues containing at least one ether linkage are the n functional aliphatic hydrocarbon residues, preferably saturated aliphatic hydrocarbon residues, containing from 1 to about 5 ether linkages and from 2 to about 20 carbon atoms.

Preferred n functional substituted hydrocarbon residues are the n functional aliphatic hydrocarbon residues, preferably the saturated aliphatic hydrocarbon residues, containing from 1 to about 20 carbon atoms, and the n functional aromatic hydrocarbon residues containing from 6 to about 10 carbon atoms which contain substituent groups such as the halogens, i.e.,fluorine, chlorine, bromine and iodine hydroxyl, -COOH, and-COOR′ groups wherein R′ represents alkyl groups containing from 1 to about 6 carbon atoms.

Preferred n functional substituted hydrocarbon residues containing at least one ether linkage are the n functional aliphatic, preferably saturated aliphatic, hydrocarbon residues containing from 2 to about 20 carbon atoms and from 1 to about 5 ether linkages which contain substituent groups such as the halogen hydroxyl, -COOH, and -COOR′ groups wherein R′ is as defined above.

It is to be understood that where substituent groups are present, they should be such that they do not unduly hinder or interfere with the photocure of the polyfunctional acrylic monomers.

The more preferred polyfunctional acrylic monomers are those represented by Formula III wherein R is selected from n functional saturated aliphatic hydrocarbon residues containing from 1 to about 20 carbon atoms, a hydroxyl substituted n functional saturated aliphatic hydrocarbon residue containing from 1 to about 20 carbon atoms, a n functional saturated aliphatic hydrocarbon residue containing from 2 to about 20 carbon atoms and from 1 to about 5 ether linkages, and a hydroxyl substituted n functional saturated aliphatic hydrocarbon residue containing from 2 to about 20 carbon atoms and from 1 to about 5 ether

linkages. Of these the polyfunctional acrylate ester monomers wherein R is an n functional saturated aliphatic hydrocarbon, ether, or polyether radical are preferred, with those monomers wherein R is an n valent saturated aliphatic hydrocarbon radical being more preferred.

More particularly, the difunctional acrylic monomers, or diacrylates, are represented by Formula III wherein n is 2; the trifunctional acrylic monomers, or triacrylates, are represented by Formula III wherein n is 3; and the tetra-functional acrylic monomers, or tetraacrylates, are represented by Formula III wherein n is 4.

Some illustrative non-limiting examples of suitable polyfunctional acrylate ester monomers of Formula III are set forth in Table I.

TABLE I

Diacrylates

$CH_2=CHCOO-CH_2-OOCCH=CH_2$;

$CH_2=CHCOO-CH_2-CH_2-OOCCH=CH_2$;

$CH_2=CHCOO-CH_2-CHOH-CH_2-OOCCH=CH_2$;

$CH_2=CHCOO-(CH_2)_6-OOCCH=CH_2$;

$$CH_2=CHCOO-CH_2-CH_2-\underset{OOCCH=CH_2}{CH}-CH_3 \quad ;$$

$CH_2=CHCOO-CH_2-CH_2-O-CH_2-CH_2-O-CH_2-CH_2-O-CH_2-CH_2-OOCCH=CH_2$;

$$CH_2=CHCOO-CH_2-\underset{CH_3}{\overset{CH_3}{C}}-OOCCH=CH_2 \quad ;$$

$$CH_2=CHCOO-CH_2-\underset{CH_3}{\overset{CH_2OH}{C}}-CH_2-OOCCH=CH_2 \quad ;$$

$$CH_2=CHCOO-CH_2-\underset{CH_2Br}{\overset{CH_2OH}{C}}-OOCCH=CH_2 \quad ;$$

$CH_2=CHCOO-CH_2-CH=CH-CH_2-CH_2-OOCCH=CH_2$ ;

$$CH_2=CHCOO-CH_2-\overset{OCH_3}{CH}-CH_2-OOCCH=CH_2 \quad ;$$

$CH_2=CHCOO-(CH_2)_5-OOCCH=CH_2$ ;

$$CH_2=CHCOO-CH_2-\underset{CH_3}{\overset{CH_3}{C}}-CH_2-OOCCH=CH_2 \quad ;$$

$$CH_2=CHCOO-CH_2-CH_2-CH_2-\underset{C_2H_5}{CH}-CH_2-CH_2-OOCCH=CH_2 \quad ;$$

$CH_2=CHCOO-CH_2-CH_2-O-CH_2-CH_2-OOCCH=CH_2$ ;

$CH_2=CHCOO-CH_2-CH_2-O-CH_2-CH_2-O-CH_2-CH_2-OOCH=CH_2$ ;

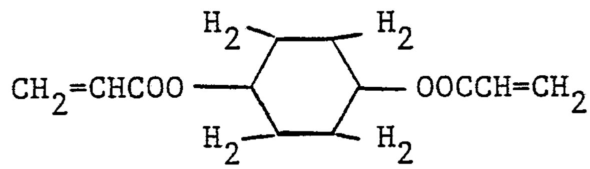

;

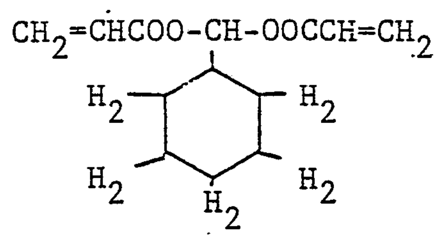

;

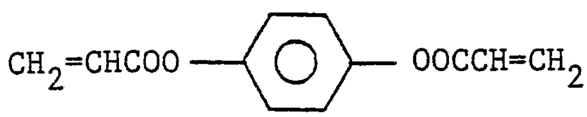

; and

$CH_2=CHCOO-(CH_2)_{12}-OOCCH=CH_2$ ;

Triacrylates

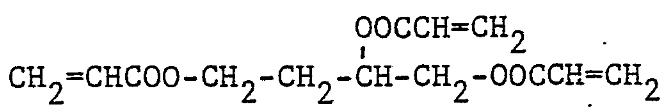

;

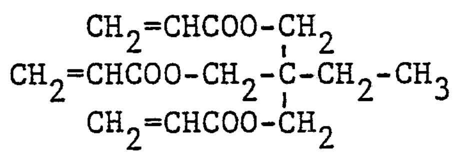

;

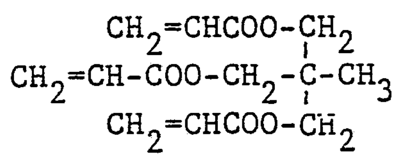

;

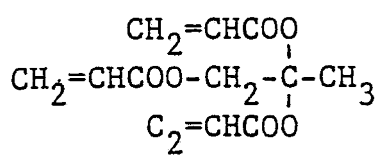

; and

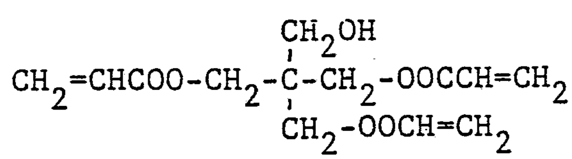

.

Tetraacrylates

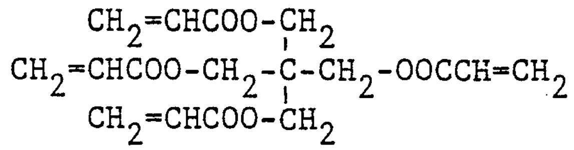 ;

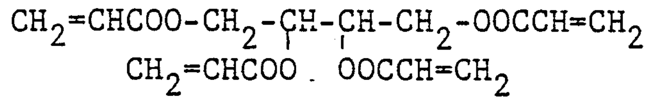 ;

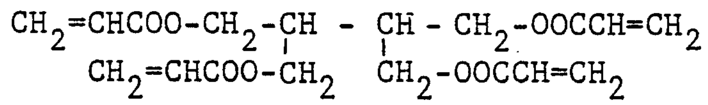 ; and

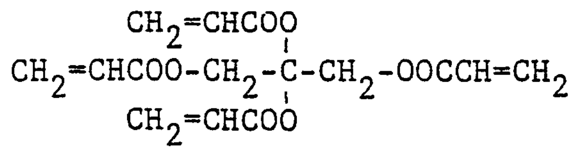 .

These polyfunctional acrylate esters and their production are well known in the art. One method of producing the di-, tri-, or tetraacrylate esters involves reacting acrylic acid with a di-, tri-or etrahydroxyl compound to produce the di-, tri-, or tetraester. Thus, for example, acrylic acid can be reacted with ethylene glycol to produce ethylene glycol diacrylate.

In the practice of the instant invention wherein two articles are bonded to each other by means of the photocured acrylic adhesive comprised of the photocured reaction products of at least one of the aforedescribed polyfunctional acrylate monomers a photocurable composition containing at least one of said polyfunctional acrylate monomers is applied onto the surfaces of at least one of the articles which are to be bonded or adhered together. The articles are then brought into contact with each other in a manner such that the surfaces of the article having the photocurable acrylic composition thereon are in intimate contact with the surfaces of the other article, and the two articles, or at least the surfaces which are to be adhered together and which have the adhesive composition thereon, are then exposed to ultraviolet radiation of an intensity and for a period of time effective to photocure said photocurable composition to form said photocured acrylic adhesive.

Although the photocurable composition may contain only one of the aforedescribed polyfunctional acrylate monomers preferred compositions are those which contain a mixture of two or more different monomers, preferably at least one dicarylate monomer and at least one triacrylate monomer. When the composition contains a mixture of a dicarylate monomer and a triacrylate monomer it is generally preferred that the weight ratio of said diacrylate to said triacrylate is from about 30:70 to about 70:30. Exemplary mixtures of diacrylates and triacrylates include mixtures of hexanediol diacrylate and pentaerythritol triacrylate, hexanediol diacrylate and trimethylolpropane triacrylate, and diethyleneglycol diacrylate and trimethylolpropane triacrylate.

The uncured adhesive compositions of the present invention also contain a photoinitiator. The photoinitiators are well known in the art and function to effectuate the photocuring of the polyfunctional acrylate monomer(s) to a thermoset polymer(s). Some illustrative non-limiting examples of these known photoinitiators or photosensitizers include ketones such as benzophenone, acetophenone, benzil, benzyl methyl ketone; benzoins such as benzoin methyl ether, alpha-hydroxymethyl benzoin isopropyl ether; halogen containing compounds such as alpha-bromoacetophenone, p-bromoacetophenone, and alpha-chloromethylnaphthalene; and azobisisobutyronitrile. The amount of said photoinitiators or phostosensitizers present in the instant adhesive compositions is a photosensitizing or photoinitiating amount, i.e., an amount effective to effect the UV photocure of the polyfunctional acrylate monomers present in the composition to thermoset polymers. Generally this amount is from about 0.01 to about 20 weight percent, preferably from about 0.1 to about 10 weight percent, and more preferably from about 0.5 to about 5 weight percent. Weight percent is based on the amounts of the polyfunctional acrylate monomers present in the compositions.

The photocurable adhesive compositions of the instant invention may also optionally contain various

flatting agents, surface active agents, thixotropic agents, and latent ultraviolet radiation light absorbers. All of these additives and the use thereof are well known in the art and do not, therefore, require extensive discussion.

In the practice of the present invention the photocurable compositions are prepared by admixing together the polyfunctional acrylate monomer(s) with the photoinitiator, and optionally, if so desired, any of the aforedescribed additives. Additionally, if so desired to reduce the viscosity of the adhesive composition, an organic solvent such as alcohol may optionally be incorporated into the formulation. Generally, the amount of solvent present, if any, is such that evaporation of the solvent occurs before any deleterious effects develop on the polycarbonate resin part due to the aggresive (in the chemical etching sense) of the solvent. Alternately the solvent employed may be one which is non-aggresive towards polycarbonate resin.

The composition is cured, preferably in an inert, e.g., nitrogen, atmosphere, by ultraviolet radiation which has a wavelength from 1849 A. to 4000A. The lamp system used to generate such radiation can consist of ultraviolet lamps which can consist of discharge lamps, as for example xenon, metallic halide, metallic arc such as low or high pressure mercury vapor discharge lamps, etc, having operating pressures of from as low as a few milli-torr up to about 10 atmospheres.

By curing of the composition is meant both the polymerization of the polyfunctional acrylic monomers and cross-linking of the polymers.

The aromatic carbonate shaped articles of the present invention may be bonded to other aromatic carbonate resin parts or to parts made from other plastic materials by means of the acrylic adhesives of the present invention. The other plastic materials include polyesters, styrene resins, acrylate resins, vinyl chloride polymers, polyaryl ethers, polyarylates, and polyphenylene oxide resins.

The polyesters which are suitable for use herein are generally those derived from an aliphatic or cycloaliphatic diol or mixtures thereof, preferably containing from 2 to about 10 carbon atoms, and at least one aromatic dicarboxylic acid. The polyesters which are derived from an aliphatic diol and an aromatic dicarboxylic acid have repeating units of the formula

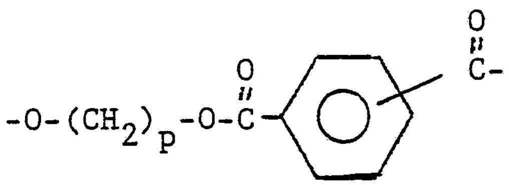

wherein p is an integer having a value of from 2 to 5.

The preferred polyesters are poly(alkylene terephthalates), e.g. poly(ethylene terephthalate) and poly-(butylene terephthalate).

Also contemplated herein are the above polyesters with minor amounts, e.g., from 0.5 to about 2 percent by weight, of units derived from aliphatic acid/and or aliphatic polyols to form copolyesters. The aliphatic polyols include glycols, such as poly(ethylene glycol). These can be made following the teachings of, inter alia, U.S. Pat. Nos. 2,465,319 and 3,047,539.

The polyesters which are derived from a cycloaliphatic diol and an aromatic dicarboxylic acid are prepared by condensing either the cis-or trans-isomer (or mixtures thereof) of, for example, 1,4-cyclohexanedimethanol with an aromatic dicarboxylic acid so as to produce a polyester having recurring units of the following formula

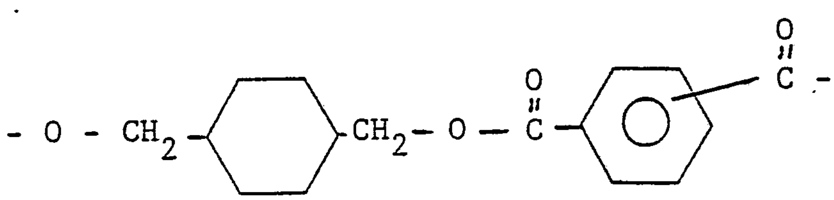

Examples of aromatic dicarboxylic acids which can be utilized in the preparayion of the polyesters include isophthalic acid, terephthalic acid, 1,2-di (carboxylphenyl)ethane, 4,4′-dicarboxydiphenyl ether, etc., and mixtures thereof. All of these acids contain at least one aromatic nucleus. Fused rings can also be present, such as in 1,4-or 1,5-naphthalenedicarboxylic acids. The preferred dicarboxylic acids are terephthalic acid and isophthalic acid or mixtures thereof.

A preferred polyester may be derived from 1,4-cyclohexanedimethanol with terephthalic acid, isophthalic acid, or mixtures thereof. Another preferred polyester is a copolyester derived from cyclohexanedimethanol, an alkylene glycol such as ethylene glycol, and isophthalic acid, terephthalic acid or a mixture of isophthalic and terephthalic acids.

The polyesters described herein are either commercially available or may be produced by methods well known in the art such as those set forth, inter alia, in U.S. Patent No. 2,901,466.

The styrene resins suitable for use herein include the ABS type polymers, the molecules of which contain two or more polymeric parts of different compositions that are bonded chemically. The polymer is prepared by polymerizing a conjugated diene such as butadiene or a conjugated diene with a monomer copolymerizable therewith, such as styrene, to provide a polymeric backbone. After formation of the backbone, at least one grafting monomer, and preferably two, are polymerized in the presence of the prepolymerized backbone to obtain the graft polymer. These resins are prepared by methods well known in the art.

The backbone polymer, as mentioned, is preferably a conjugated diene polymer such as polybutadiene, polyisoprene, or a copolymer such as butadiene-styrene, butadiene-acrylonitrile, or the like.

One monomer or group of monomers that may be polymerized in the presence of the prepolymerized backbone are the monovinylaromatic hydrocarbons. Examples of these monovinylaromatic compounds include styrene, 3-methylstyrene, 3,5-diethylstyrene, 4-n-propylstyrene, alpha-methylstyrene, alpha-methyl vinyltoluene, alpha-chorostyrene, alpha-bromostyrene dichlorostyrene, dibromostyrene, tetrachlorostyrene, mixtures thereof, and the like. The preferred monovinylaromatic hydrocarbons used are styrene and/or alpha-methylstyrene.

A second group of monomers that may be polymerized in the presence of the prepolymerized backbone are acrylic monomers such as acrylonitrile, substituted acrylonitrile and/or acrylic acid esters, exemplified by acrylonitrile, and alkyl acrylates such as methyl acrylate and methyl methacrylate. Some illustrative non-limiting examples of these monomers include acrylonitrile, ethacrylonitrile, methacrylonitrile, alpha-chloroacrylonitrile, beta-chloroacrylonitrile, alpha-bromoacrylonitrile, methyl acrylate, methyl methacrylate, ethyl acrylate, butyl acrylate, propyl acrylate, isopropyl acrylate, propyl methacrylate, and mixtures thereof. The preferred acrylic monomer is acrylonitrile and the preferred acrylic acid esters are ethyl acrylate and methyl methacrylate.

In the preparation of the graft polymer, the conjugated diolefin polymer or copolymer exemplified by a 1,3-butadiene polymer or copolymer comprises about 50 % by weight of the total graft polymer composition. The monomers polymerized in the presence of the backbone, exemplified by styrene and acrylonitrile, comprise from about 40 to about 95% by weight of the total graft polymer composition.

The second group of grafting monomers, exemplified by acrylonitrile, ethyl acrylate or methyl methacrylate, of the graft polymer composition, preferably comprise from about 10% to about 40% by weight of the total graft copolymer composition. The monovinylaromatic hydrocarbon exemplified by styrene comprise from about 30 to about 70% by weight of the total graft polymer composition.

In preparing the polymer, it is normal to have a certain percentage of the polymerizing monomers that are grafted on the backbone combine with each other and occur as free copolymer. If styrene is utilized as one of the grafting monomers and acrylonitrile as the second grafting monomer, a certain portion of the composition will copolymerize as free styrene-acrylonitrile copolymer. In the case where alpha-methyl styrene (or other monomer) is substituted for the styrene in the composition used in preparing graft polymer, a certain percentage of the composition may be an alpha-methylstyrene-acrylonitrile copolymer. Also, there are occasions where a copolymer, such as alpha-methylstyrene-acrylonitrile, is added to the graft polymer copolymer blend. When the graft is polymer blend is referred to herein, it is meant optionally to include at least one copolymer blended with the graft polymer composition and which may contain up to 90% of free copolymer.

Optionally, the elastomeric backbone may be an acrylate rubber, such as one based on n-butyl acrylate, ethylacrylate, 2-ethylhexylacrylate, and the like. Additionally, minor amounts of a diene may be copolymerized in the acrylate rubber backbone to yield improved grafting with the matrix polymer.

The vinyl chloride polymers suitable for use herein are polyvinyl chloride and copolymers of vinyl chloride and copolymers of vinyl chloride with olefinically unsaturated polymerizable compounds which contain at least 80 percent by weight of vinyl chloride incorporated therein.

Olefinically unsaturated compounds which are suitable for copolymerization include vinylidene halides, such as vinylidene chloride and vinylidene fluoride, vinyl esters, such as vinyl acetate, vinyl propionate, vinyl butyrate, vinyl chloracetate, vinyl benzoate, acrylate and alpha-alkyl-acrylate and their alkyl esters, anhydride, methyl methacrylate, ethyl acrylate, 2-ethylhexylacrylate, butyl methacrylate, 2-hydroxypropyl

acrylate, acrylamide, N-methyl acrylamide, acrylonitrile and methacrylonitrile, aromatic vinyl compounds, such as styrene and vinyl naphthalene and olefinically unsaturated hydrocarbons such as ethylene, bicyclo-[2,2,1]-hept-2-ene and bicyclo-[2,21]-hepta-2.5 diene. Polymerized vinyl acetate may be hydrolyzed to provide vinyl alcohol moeities in the polymer.

These vinyl chloride polymers are well known in the art and can be prepared by the usual methods of solution, emulsion, suspension, bulk or mass polymerization.

Vinyl chloride polymers which have molecular weights of from about 40,000 to about 60,000 are preferred.

The alkyl acrylate resin which may be used herein includes a homopolymer of methyl methacrylate (i.e. polymethyl methacrylate) or a copolymer of methyl methacrylate with a vinyl monomer (e.g. acrylonitrile, N-allylmaleimide or N-vinyl malemide), or an alkyl acrylate or methacrylate in which the alkyl group contains from 1 to 8 carbon atoms, such as methyl acrylate, ethyl acrylate, butyl acrylate, ethyl methacrylate and butyl methacrylate. The amount of methyl methacrylate is greater than about 70% by weight of this copolymer resin.

The alkyl acrylate resin may be grafted onto an unsaturated elastomeric backbone such as polybutadiene, polyisoprene, and/or butadiene or isoprene copolymers. In the case of the graft copolymer, the alkyl acrylate resin comprises greater than about 50 weight percent of the graft copolymers.

These resins are well known in the art and are commercially available.

The methyl methacrylate resins have a reduced viscosity of from 0.1 to about 2.0 dl/g in a one percent chloroform solution at 25° C.

The polyarylates employed in the instant invention are known compounds and are described, along with methods for their preparation, in U.S. Patent Nos. 3,216,970, 3,234,167, 3,388,097, 3,824,213 3,884,990 and 3,946,091, all of which are incorporated herein by reference. The polyarylates are polymers consisting essentially of aromatic ester units and may be conveniently prepared by the reaction of at least one dihydric phenol and at least one aromatic dicarboxylic acid or an ester forming reactive derivative thereof.

The dihydric phenols useful in the preparation of the polyarylates are those as described hereinafore. The aromatic dicarboxylic acids used in the preparation of the polyarylates may be represented by the general formula

$$HO-\overset{O}{\overset{\|}{C}}-Ar-\overset{O}{\overset{\|}{C}}-OH$$

wherein Ar represents a divalent aromatic radical, preferably one containing from 6 to about 20 carbon atoms. Some illustrative non-limiting examples of these divalent aromatic radicals include phenylene, substituted, preferably alkyl substituted, phenylene, biphenylene, substituted, preferably alkyl substituted, biphenylene, naphthylene, and substituted, preferably alkyl substituted, naphthylene. In the formula Ar may also represent a divalent radical of the type $Ar'-R^4-AR''$ wherein Ar′ and Ar″ are independently selected from the type of aromatic radicals described for Ar, and $R^4$ has the same meaning as W in Formula II.

Particularly useful aromatic dicarboxylic acids of the above formula are those represented by the general formula

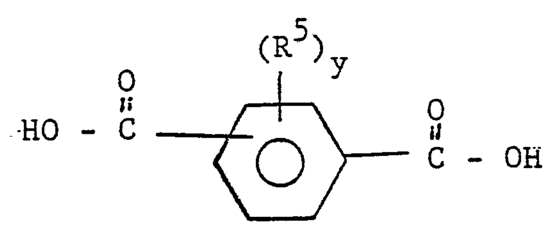

wherein $R^5$ is independently selected from alkyl radicals containing from 1 to about 8 carbon atoms and y is a positive integer having a value of from 0 to 4 inclusive. Preferred aromatic dicarboxylic acids are isophthalic acid, terephthalic acid, and mixtures thereof.

Instead of using the aromatic dicarboxylic acids per se it is preferred to utilize their ester forming reactive derivatives. Particularly useful ester forming reactive derivatives of the aromatic dicarboxylic acids are the diacid halides. Thus, for example, instead of using isophthalic acid, terephthalic acid, or mixtures thereof it is preferred to employ isophthaloyl dichloride, terephthaloyl dichloride, or mixtures thereof.

The polyarylates may be prepared by a variety of known processes such as interfacial polymerization, melt polymerization, transesterification, and the like.

The polyphenylene oxides are known polymers which are described, inter alia, in U.S. Patent Nos.

3,306,974, 3,306,875, 3,257,357 and 3,257,348, all of which are incorporated herein by reference. Particularly useful polyphenylene oxides, from the standpoint of the instant invention, are those having the repeating structural unit represented by the formula

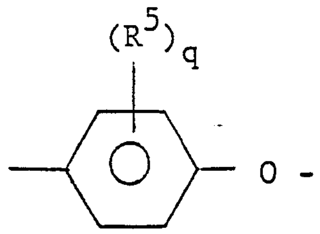

wherein $R^5$ is independently selected from monovalent substituents selected from halogen, hydrocarbon radicals free of tertiary alpha-carbon atoms, halohydrocarbon radicals having at least two carbon atoms between the halogen atom and the phenyl nucleus and being free of alpha-carbon atoms, hydrocarbonoxy radicals being free of a tertiary alpha-carbon atom, and halohydrocarbonoxy radicals having at least 2 carbon atoms between the halogen atom and the phenyl nucleus and being free of tertiary alpha-carbon atom; and q is a positive integer having a value of from 0 to 4 inclusive. Examples of suitable polymers may be found in the above referenced patents.

Particularly useful polyphenylene oxides of this type are those having alkyl substitution ortho to the oxygen ether atom and preferably ortho methyl substitution.

Particularly useful polyphenylene oxides are those containing recurring structutal units represented by the formula

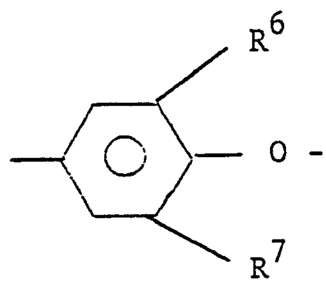

wherein $R^6$ and $R^7$ are independently selected from methyl and ethyl radicals.

Some illustrative non-limiting examples of polyphenylene oxides include poly(2,6-dimethyl-1,4-phenylene)ether, poly(2-methyl-6-ethyl-1,4-phenylene)ether, and poly(2,6-diethyl-1,4-phenylene) ether.

The poly(aryl ether) resins suitable for use herein are linear, thermoplastic polyarylene polyether sulfones, wherein the arylene units are interspersed with ether and sulfone linkages. These resins may be obtained by the reaction of an alkali metal double salt of a dihydric phenol and a dihalobenzenoid compound, either or both of which contain a sulfone linkage, to provide sulfone units in the polymer chain in addition to arylene units and ether units. The polysulfone polymer has a basic structure comprising recurring units of the formula

-O-E-O-E'-

wherein E is the residium of the dihydric phenol and E' is the residium of the benzenoid compound having an inert electron withdrawing group in at least one of the positions ortho and para to the valence bonds; both of said residua are valently bonded to the ether oxygens through aromatic carbon atoms. Such polysulfones are included within the class of polyarylene polyether resins described in U.S Patent Nos. 3,264, 536 and 4,108,837, incorporated herein by reference, and in U.S. Patent Nos. 4,286,075 and 4,369,136, both of which are also incorporated herein by reference.

In the practice of the present invention, since the adhesive acrylic composition is cured by ultraviolet radiation, if the adhesive composition is disposed in the interior of a plastic article, as for example when one part is a connector and the other part is a tube or hose, it is necessary that the part, e.g. the connector, be non-opaque to ultraviolet radiation, i.e., it transmit ultraviolet radiation. Preferably, both parts are non-opaque to ultraviolet radiation.

The amount of the adhesive composition applied is an amount which, when cured, is effective to form a

strong and durable bond between the two parts.

DESCRIPTION OF THE PREFERRED EMBODIMENT

The following example is set forth to further illustrate the present invention, and is not to be construed in a limiting sense. Unless otherwise indicated all parts and percentages are parts and percentages by weight.

The following example illustrates the instant invention.

EXAMPLE 1

A photocurable acrylate adhesive composition is prepared by mixing together 50 parts by weight of trimethylolpropane triacrylate, 50 parts by weight of hexanediol diacrylate, 5 parts by weight of resorcinol monobenzoate, 2 parts by weight of alpha, alpha - diethoxyacetophenone, and 0.5 parts by weight of a surfactant (Mallinckrodt's BYK-300).

One end of a flexible hose made of plasticized poly(vinyl chloride) is dipped into the photocurable acrylate adhesive composition and is then inserted into a connector made of a 80/20 blend of bisphenol-A polycarbonate and a copolyester (KODAR A150 available from Eastman Chemical Co.).

The joined parts are then passed through a Linde UV processor, under nitrogen blanketing, which contains two medium pressure mercury lamps (200 psi). The speed of the conveyor passing through said processor is 50 ft/min. The parts were bonded together after one pass through the photocuring apparatus.

Both the hose and the connector were transparent.

Obviously, other modifications and variations of the present invention may be possible in light of the above teachings. It is, therefore, to be understood that changes may be made in the particular embodiments of the invention described which are within the full intended scope of the invention as defined by the appended claims.

## Claims

1. A first shaped aromatic carbonate article bonded to at least one other plastic article by means of an ultraviolet radiation cured thermoset acrylic adhesive.

2. The article of claim 1 wherein said first shaped aromatic carbonate article is comprised of a polycarbonate resin.

3. The article of claim 1 wherein said first shaped aromatic carbonate article is comprised of a copolyester-carbonate resin.

4. The article of claim 1 wherein said other shaped plastic article is comprised of a material selected from aromatic carbonate resin, polyesters, styrene resins, acrylate resins, vinyl chloride resins, polysulfone resins, polyarylate resins, or polyphenylene oxide resins.

5. The article of claim 4 wherein said other shaped plastic article is comprised of an aromatic carbonate resin.

6. The article of claim 5 wherein said other shaped plastic article is comprised of a vinyl chloride resin.

7. The article of claim 6 wherein said vinyl chloride resin is polyvinyl chloride.

8. The article of claim 1 wherein said ultraviolet radiation cured thermoset acrylic is comprised of the ultraviolet radiation cured reaction products of at least one polyfunctional acrylate monomer represented by the formula

$$(H_2C=CH-\overset{O}{\overset{\|}{C}}-O\!\!-\!\!)_{n}\!-\!R$$

wherein:

n is an integer having a value of from 2 to 8; and

R is selected from n valent hydrocarbon residues; n valent substituted hydrocarbon residues, n valent substituted hydrocarbon residues, n valent hydrocarbon residues containing at least one ether linkage, or n valent substituted hydrocarbon residues containing at least one ether linkage.

9. The article of claim 8 wherein said n valent hydrocarbon residues are n functional aliphatic hydrocarbon residues, said n valent substituted hydrocarbon residues are n valent substituted aliphatic hydrocarbon residues, said n valent hydrocarbon residues containing at least one ether linkage are n valent

aliphatic hydrocarbon residues containing at least one ether linkage, and said n valent substituted hydrocarbon residues containing at least one ether linkage are n valent substituted aliphatic hydrocarbon residues containing at least one ether linkage.

10. The article of claim 9 wherein n is an integer having a value of from 2 to 6.

11. The article of claim 10 wherein n is an integer having a value of from 2 to 4.

12. The article of claim 11 wherein said thermoset acrylic is comprised of the reaction products of at least one diacrylate and at least one triacrylate monomer.

13. The article of claim 12 wherein said thermoset acrylic is comprised of the photocured reaction products of hexanediol diacrylate and trimethylolpropane triacrylate.

14. A structure comprising, in combination, a first shaped article comprised of an aromatic carbonate resin; at least one other shaped article comprised of a plastic resin in contact with said first shaped article; and disposed at the interface of said shaped articles a photocurable adhesive composition comprised of (i) at least one polyfunctional acrylate monomer, and (ii) at least one photoinitiator.

15. The structure of claim 14 wherein said polyfunctional acrylate monomer is represented by the formula

$$(H_2C=CH-\overset{O}{\overset{\|}{C}}-O\!\!-\!\!)_{n}\;R$$

wherein:

n is an integer having a value of from 2 to 8; and

R is selected from n valent hydrocarbon residues, n valent substituted hydrocarbon residues, n valent hydrocarbon residues containing at least one ether linkage, or n valent substituted hydrocarbon residues containing at least one ether linkage.

16. The structure of claim 15 wherein said n valent hydrocarbon residue is a n valent aliphatic hydrocarbon residue, said n valent substituted hydrocarbon residue is a n valent substituted aliphatic hydrocarbon residue, said n valent hydrocarbon residue containing at least one ether linkage is a n valent aliphatic hydrocarbon residue containing at least one ether linkage, and said n valent substituted hydrocarbon residue containing at least one ether linkage is a n valent substituted aliphatic hydrocarbon residue containing at least one ether linkage.

17. The structure of claim 16 wherein n is an integer having a value of from 2 to 6.

18. The structure of claim 17 wherein n is an integer having a value of from 2 to 6.

19. The structure of claim 18 wherein said composition contains at least one diacrylate monomer and at least one triacrylate monomer.

20. The structure of claim 19 wherein said diacrylate monomer is hexanediol diacrylate and said triacrylate monomer is trimethylolpropane triacrylate.

21. The structure of claim 14 wherein said plastic resin is selected from aromatic carbonate resins, polyesters, styrene resins, acrylate resins, vinyl chloride resins, polysulfone resins, polyarylate resins, or polyphenylene oxide resins.

22. The structure of claim 21 wherein said plastic resin is selected from aromatic carbonate resins.

23. The structure of claim 21 wherein said plastic resin is selected from vinyl chloride resins.

24. The structure of claim 23 wherein said vinyl chloride resin is polyvinyl chloride.

25. A method for adhesively bonding a shaped aromatic carbonate resin article to at least one other shaped plastic article comprising applying a layer of a photocurable adhesive composition comprised of at least one polyfunctional acrylate monomer and at least one photoinitiator onto an area of at least one of said articles, bringing said articles into contact with each other at the area containing said photocurable adhesive composition disposed thereon, and exposing at least said area having said adhesive composition disposed thereon to ultraviolet radiation of sufficient intensity and for a period of time effective to photocure said composition.

26. The method of claim 25 wherein said polyfunctional acrylate monomer is represented by the formula

$$(H_2C=CH-\overset{O}{\overset{\|}{C}}-O\!\!-\!\!)_{n}\;R$$

wherein:

n is an integer having a value of from 2 to 8; and

R is selected from n valent hydrocarbon residues, n valent substituted hydrocarbon residues, n valent hydrocarbon residues containing at least on ether linkage, or n valent substituted hydrocarbon residues containing at least one ether linkage.

27. The method of claim 26 wherein said n valent hydrocarbon residues are n valent aliphatic hydrocarbon residues, said n valent substituted hydrocarbon residues are n valent substituted aliphatic hydrocarbon residues, said n valent hydrocarbon residues containing ether linkages are n valent aliphatic hydrocarbon residues containing ether linkages, and said n valent substituted hydrocarbon residues containing ether linkages are n valent substituted aliphatic hydrocarbon residues containing ether linkages.

28. The method of claim 27 wherein n is an integer having a value from 2 to 6.

29. The method of claim 28 wherein n is an integer having a value from 2 to 4.

30. The method of claim 29 wherein said composition contains at least one diacrylate monomer and at least one triacrylate monomer.

31. The method of claim 25 wherein said other plastic shaped article is comprised of a material selected from aromatic carbonate resins, polyesters, styrene resins, acrylate resins, vinyl chloride resin, polysulfone resins, polyarylate resins, or polyphenylene oxide resin.

32. The method of claim 31 wherein said material is an aromatic carbonate resin.

33. The method of claim 31 wherein said material is a vinyl chloride resin.

34. The method of claim 33 wherein said vinyl chloride resin is polyvinyl chloride.